# EUROPEAN PATENT APPLICATION

(11) **EP 3 882 755 A1**
(43) Date of publication of application: **22.09.2021**
(21) Application number: 20163816.0
(22) Date of filing: 18.03.2020
(51) Int. Cl.: G06F 3/0488

(54) **SYSTEM AND METHOD FOR MULTI-TOUCH GESTURE SENSING**

(71) Applicant: Bayerische Motoren Werke Aktiengesellschaft, 80809 München (DE)
(72) Inventor: Koser, Iris, San Carlos, CA California 94070 (US); Mok, Brian, Santa Clara, CA California 95050 (US); Liu, Zane, Pasadena, CA California 91103 (US)

(57) **Abstract**

A system for multi-touch gesture sensing in a vehicle. The system includes a multi-touch sensing device and a controller. The multi-touch sensing device is configured to detect a multi-touch gesture on a screen of the multi-touch sensing device installed in a vehicle. The controller is configured to perform a function associated with the detected multi-touch gesture. The associated function is performed regardless of a location on the screen that the multi-touch gesture is detected. The multi-touch gesture may be a multi-finger swipe, a five-finger pinch, a five-finger expansion, a one-finger pull-down, a multi-finger single tap, or a multi-finger double tap. Acoustic or haptic feedback may be generated in response to the multi-touch gesture.

## Description

### Field

Examples relate to a multi-touch gesture sensing, more particularly a system and method for sensing a multi-touch gesture for use in a vehicle.

### Background

Nowadays, an entertainment or information system is provided in a vehicle. The in-vehicle entertainment or information system provides audio or video entertainment or information such as navigation, etc. The in-vehicle entertainment or information system can be controlled by simple dashboard knobs or dials, handsfree voice control, or a touch screen or touch pad, etc.

A touch screen or touch pad is a device that a user can give input to the system by touching a screen or a pad. Multi-touch is technology that a presence of more than one point of contact with the surface of the touch screen or touch pad can be recognized at the same time. Multi-touch gestures have been used on mobile devices such as tablet computers, smart phones, etc. For example, a two-finger pinch to zoom in, scrolling with two fingers on a trackpad of a laptop have been used.

Using a touch screen or touch pad installed in a vehicle while driving the vehicle has a safety issue. Touching the screen while driving can be distracting, as the user must focus on both driving and aiming on the screen or pad for a precise function on the display. Due to the driver's distraction issue, multi-touch gestures have not been used in vehicles other than pinch to zoom in a map.

### Summary

An example relates to a system for multi-touch gesture sensing in a vehicle. The system may include a multi-touch sensing device and a controller. The multi-touch sensing device is configured to detect a multi-touch gesture on a screen of the multi-touch sensing device installed in a vehicle. The controller is configured to perform a function associated with the detected multi-touch gesture. The associated function is performed regardless of a location on the screen that the multi-touch gesture is detected. The multi-touch gesture may be one of a multi-finger swipe, a five-finger pinch, a five-finger expansion, a one-finger pull-down, a multi-finger single tap, or a multi-finger double tap.

In one example, the controller may be configured to increase or decrease an audio volume in response to the two-finger swipe on the screen. The controller may be configured to generate an audio signal corresponding to adjusted volume level each time the adjusted volume changes above or below a predetermined level. In some examples, the system may further include an actuator configured to generate haptic feedback each time adjusted audio volume crosses over predetermined levels as a user swipes fingers down or up.

In some examples, the controller may be configured to exit a current page or application on the screen in response to the five-finger pinch. The controller may be configured to return to a previous page or application in response to the five-finger expansion. The controller may be configured to bookmark a current page displayed on the screen in response to the one-finger pull-down. The controller may be configured to mute an audio in response to the multi-finger double tap. The controller may be configured to unmute the audio in response to the multi-finger single tap.

A different functionality may be assigned to the same multi-touch gesture depending on an application being executed. The system may provide acoustic or haptic feedback (e.g. voice notification or vibration, etc.) in response to the multi-touch gesture. The system may be installed in a vehicle cabin.

### Brief description of the Figures

Some examples of apparatuses and/or methods will be described in the following by way of example only, and with reference to the accompanying figures, in which
Fig. 1 is a block diagram of a system for sensing a multi-touch gesture in accordance with one example;
Fig. 2A shows a two-finger swipe (up/down) gesture;
Fig. 2B shows an example of a full screen overlay pop-up for indicating the level of adjustments;
Fig. 3A shows a five-finger pinch gesture;
Fig. 3B shows an example operation of the five-finger pinch gesture;
Fig. 4 shows a five-finger expansion gesture;
Fig. 5A shows a one-finger pull-down gesture;
Fig. 5B shows an example operation of the one-finger pull-down gesture to save a page while using a map application;
Fig. 6 shows a two-finger double tap gesture; and
Fig. 7 is an example flow diagram of a process for sensing a multi-touch gesture in accordance with one example.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed herein for sensing multi-touch gestures in a vehicle. The multi-touch gestures may be used for in-vehicle functions in order to prevent driver's distraction while driving a vehicle and increase safety of the driver and passengers. Multi-touch gestures disclosed herein can provide an eyes-free control of in-vehicle functionalities by allowing control of the in-vehicle functionalities by touching anywhere on a touch screen or a touch pad.

In examples disclosed herein, multi-touch gestures that do not need precise touching or interaction with the touch screen or touch pad are used to control numerous in-vehicle functionalities. The multi-touch gestures disclosed herein may be executed by touching anywhere on a screen or pad and may be read in the periphery field of view of the user so that the driver may not need to look away from the street while driving. Combined with sensory feedback (e.g. acoustic, haptic, etc.) the multi-touch gestures disclosed herein may be executed "blindly" without any misuse and driver distraction.

It should be noted that the examples for the multi-touch gestures will be explained with reference to a touch screen installed in a vehicle, but the touch screen may be a touch pad, a track pad, or any other similar device, and the system may be used for other applications other than in-vehicle applications.

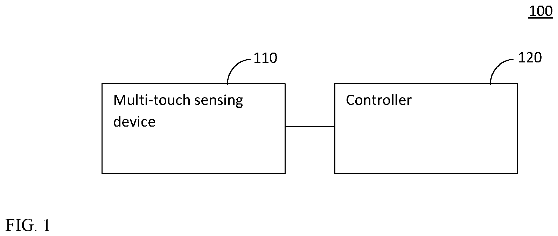

Fig. 1 is a block diagram of a system 100 for sensing a multi-touch gesture in accordance with one example. The system 100 includes a multi-touch sensing device 110 and a controller 120. The system 100 may be installed in a vehicle. The vehicle may be any type of machine for transportation including, but not limited to, a car, a truck, a bus, a sport utility vehicle, a boat, a recreation vehicle, a motorcycle, or the like. The system 100 may optionally include additional functional units, such as a wireless and/or wired communication unit, an additional input unit, an output unit, a storage, or the like.

The multi-touch sensing device 110 is configured to detect a multi-touch gesture on a screen of the multi-touch sensing device 110. Multi-touch is a technology that can detect a presence of more than one contact with the surface of the screen or pad at the same time. Multi-touch technology may be implemented with capacitive sensing technology, etc. A capacitive touch screen may include a capacitive touch sensor.

The multi-touch sensing device 110 may be a touch screen, a touch pad, a track pad, or the like. The multi-touch sensing device 110 (e.g. a touch screen) may be layered on top of a display (not shown in Fig. 1) such as a liquid crystal display (LCD) panel, an organic light emitting diode (OLED) panel, or the like. A user may provide an input to, or control, the system 100 by touching the screen of the multi-touch sensing device 110 with a finger(s), a stylus, or the like. The touch screen enables the user to interact with what is displayed on the display.

The controller 120 is coupled to the multi-touch sensing device 110. The controller 120 is configured to recognize the multi-touch gesture on the multi-touch sensing device 110 and perform a function associated with the detected multi-touch gesture. The controller 120 may execute one or more applications simultaneously and generates an output on a screen of the display. The controller 120 may perform numerous signal processing and/or various screen operations to control the display or to implement certain functions in response to the multi-touch gestures detected by the multi-touch sensing device 110.

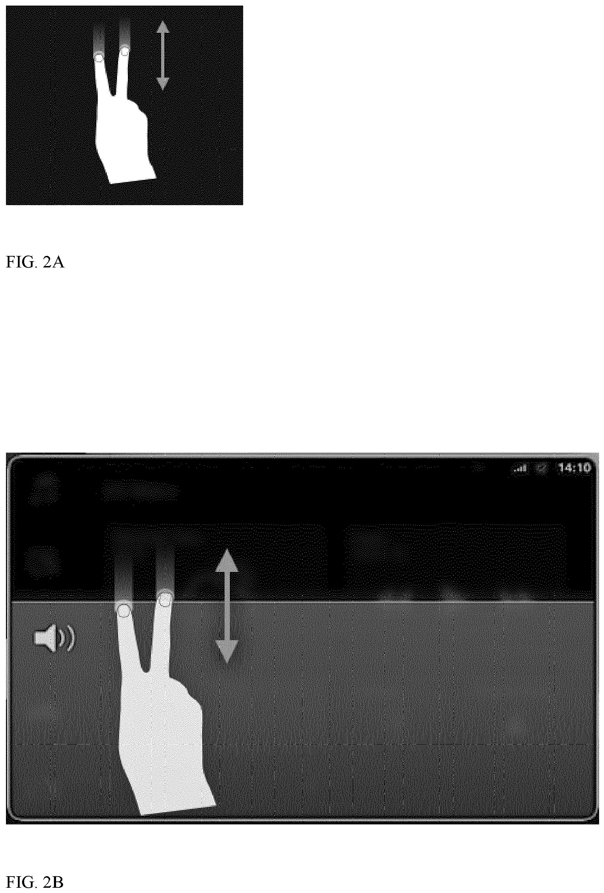

Figs. 2-6 show some example multi-touch gestures that may be used for in-vehicle applications. The multi-touch gesture may be a two-finger (up/down) swipe, a five-finger pinch, a five-finger expansion, a one-finger pull-down, a two-finger single tap, or a two-finger double tap. In examples, the multi-touch gestures may work regardless of the location of the touch on the screen so that the user can make the multi-touch gesture on the screen without being distracted from driving a vehicle. The user may make the multi-touch gestures on any location of the screen of the multi-touch sensing device. The multi-touch gestures may not affect the running application on the system 100. For example, if a user makes a multi-touch gesture for adjusting an audio volume while a map application is running on the system 100, the multi-touch gesture for adjusting the audio volume may not affect the map application.

Fig. 2A shows a two-finger swipe (up/down) gesture. The user may touch anywhere on the screen with two fingers and swipe up or down on the screen. The two-finger swipe gesture may be used for audio volume control, such that the audio volume may be increased by the two-finger swipe up gesture and the audio volume may be decreased by the two-finger swipe down gesture, or vice versa. The amount of audio volume adjustment may depend on the length of the swiping. As the user swipes fingers up or down, the audio volume may be adjusted in real time. For example, when a user is listening to a music or watching a video, the audio volume may be adjusted in real time in response to the two-finger swipe gesture.

Alternatively, the two-finger swipe gesture may be used for in-vehicle temperature control, such that the temperature setting may be increased by the two-finger swipe up gesture and the temperature setting may be decreased by the two-finger swipe down gesture, or vice versa. The amount of temperature adjustment may depend on the length of the swiping. Alternatively, the two-finger swipe gesture may be used for different functionalities, and the different functionalities assigned to the two-finger swipe gesture may depend on the currently running application on the system.

The two-finger swipe gesture may open a temporary overlay pop-up (e.g. a full or partial screen pop-up) during the swipe to indicate the level of the volume (or temperature, etc.) adjustments. Fig. 2B shows an example of a full screen overlay pop-up indicating the level of adjustments.

As the user swipes the fingers up or down on the screen, a translucent overlay window may pop up and the size of the overlay pop-up may change accordingly to indicate the level of the adjusted audio volume or temperature, etc. Alternatively, instead of full/partial screen pop-up, a different type of indicator (e.g. a vertical slider) may be shown to indicate the level of adjustment as the user swipes the fingers. The overlay pop-up or indicator is temporary such that as soon as the user releases the fingers from the screen, the overlay pop-up or indicator may be closed.

As an alternative, more than two fingers may be used for the up/down swiping. For example, instead of two-finger swiping, three-, four-, or five-finger up/down swipe gesture may be used.

The two-finger swipe gesture may not affect the running application. For example, when a user makes the two-finger swipe gesture to adjust an audio volume while a map or navigation application is running, the finger swiping may not affect the map/navigation application at all, but only changes the audio volume.

The two-finger swipe gesture may be made on any location on the screen. The associated function may be performed regardless of the location of the multi-touch on the screen so that the user may adjust the audio volume, temperature, or the like without closely looking at the touch screen to make the gesture.

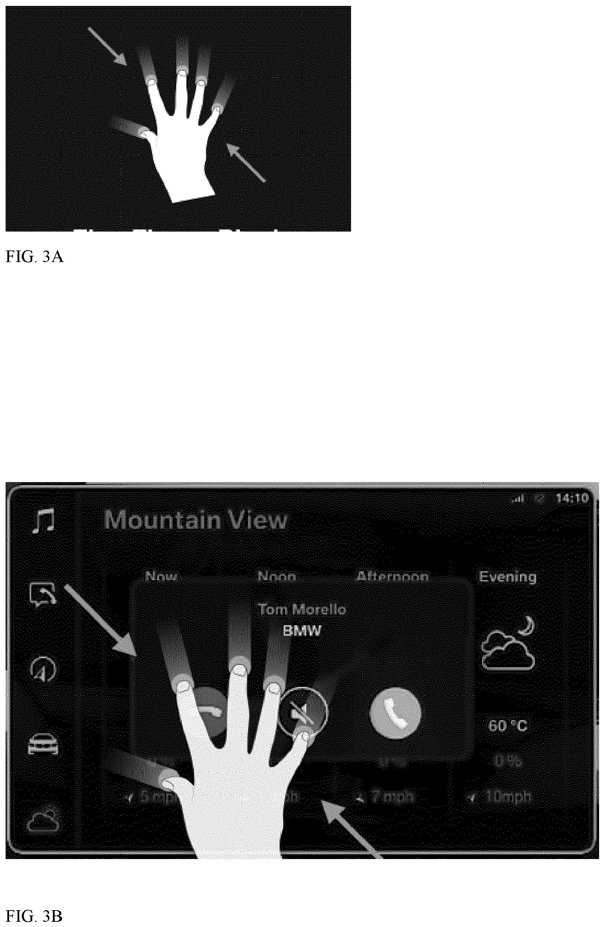

Fig. 3A shows a five-finger pinch gesture. The user may touch anywhere on the screen with five fingers and slide finger tips inward on the screen. The five-finger pinch gesture may be used to close a current page, application, or domain and return to, for example a home screen or a previously running application, etc. Alternatively, the five-finger pinch gesture may be used to reject or accept, e.g. an incoming phone call. Fig. 3B shows an example operation of the five-finger pinch gesture. In this example, a phone call application is closed as the user makes the five-finger pinch gesture on the screen.

The five-finger pinch gesture may be made on any location of the screen. The location of the multi-touch on the screen does not matter. As an alternative, instead of five-finger pinch, four or three finger pinch gesture may be used.

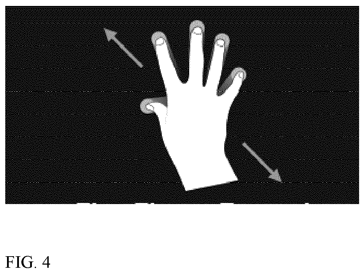

Fig. 4 shows a five-finger expansion gesture. The five-finger expansion gesture is an opposite operation of the five-finger pinch gesture. The user may touch anywhere on the screen with five fingers and slide finger tips radially outward on the screen. The five-finger expansion gesture may be used for opposite operation of the five-finger pinch gesture. For example, the five-finger expansion gesture may be used to re-open a previous page, application, or domain, or accept or reject an incoming phone call.

The five-finger expansion gesture may be made on any location of the screen. The location of the multi-touch on the screen does not matter. As an alternative, instead of five-finger expansion, four or three finger expansion gesture may be used.

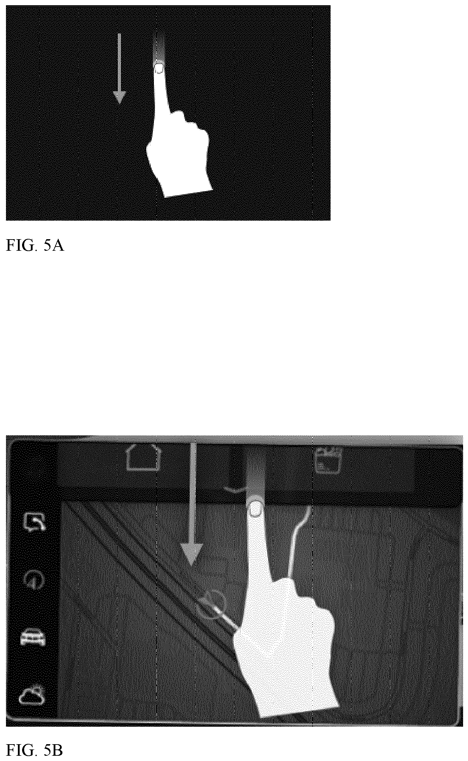

Fig. 5A shows a one-finger pull-down gesture. The user may touch anywhere on the screen with one finger and pull down on the screen. The one-finger pull-down gesture may be used to bookmark or save a current page on the screen. Fig. 5B shows an example operation of the one-finger pull-down gesture to save a page while using a map application. The one-finger pull-down gesture may be made on any location of the screen.

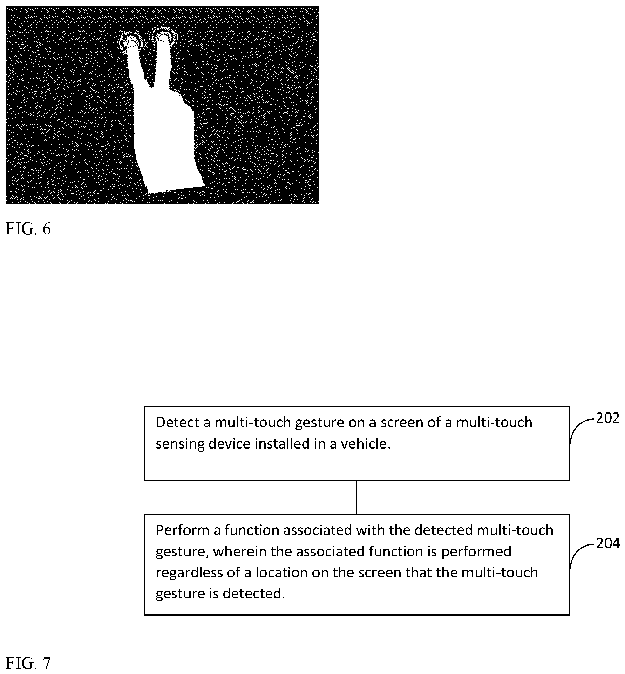

Fig. 6 shows a two-finger double tap gesture. The user may tap twice anywhere on the screen with two fingers. The two-finger double tap gesture may be used to mute audio. A two-finger single tap gesture anywhere on the screen may be used to unmute the audio and return to the previous audio volume setting. Alternatively, instead of two-finger tapping, three-, four-, or five-finger (double or single) tapping or triple (or more) tapping may be used to mute or unmute the audio. The user may tap any location of the screen for this gesture.

The functionalities assigned to the multi-touch gestures disclosed above are merely examples, and a different functionality may be assigned to each of the multi-touch gestures. The functionalities assigned to the multi-touch gestures may be application-dependent such that a different functionality may be assigned to the same multi-touch gesture depending on the application currently running on the system. For different applications, the same multi-touch gesture may be used for different functionalities.

In some examples, as the user makes the multi-touch gesture, sensory feedback may be provided to the user in response to, or while making, the multi-touch gesture. With the sensory feedback, a user may have a better experience with the system. The sensory feedback may be acoustic feedback, haptic feedback, or the like. The system may make a sound in response to the multi-touch gesture. Alternatively, the system may include an actuator to generate vibration, a sensation of motion, or distinct tactile experience in response to the multi-touch gesture. For example, when the user adjusts audio volume with the two-finger swipe gesture, audio feedback (e.g. a beep or any sound) corresponding to the adjusted volume level may be generated each time the adjusted volume changes above or below a predetermined level. Alternatively, a haptic feedback (e.g. vibration) may be generated each time the audio volume level crosses over specific predetermined levels as the user swipes the fingers down or up. The acoustic feedback may be verbal notification by the system. For example, when the user adjusts the vehicle cabin temperature with the two-finger swipe gesture, the system may notify the set temperature as the user swipes the fingers down or up.

Fig. 7 is an example flow diagram of a process for sensing a multi-touch gesture in accordance with one example. A multi-touch gesture is sensed on a screen of a multi-touch sensing device installed in a vehicle (202). A function associated with the detected multi-touch gesture is then performed (204). The associated function is performed regardless of a location on the screen that the multi-touch gesture is detected. The multi-touch gesture is one of a multi-finger swipe, a five-finger pinch, a five-finger expansion, a one-finger pull-down, a multi-finger single tap, or a multi-finger double tap. In some examples, a different functionality may be assigned to the same multi-touch gesture depending on an application being executed. The method may further include generating acoustic or haptic feedback in response to the multi-touch gesture.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A system for multi-touch gesture sensing in a vehicle, comprising:
a multi-touch sensing device configured to detect a multi-touch gesture on a screen of the multi-touch sensing device installed in a vehicle; and
a controller configured to perform a function associated with the detected multi-touch gesture, wherein the associated function is performed regardless of a location on the screen that the multi-touch gesture is detected.

2. The system of claim 1, wherein the multi-touch gesture is one of a multi-finger swipe, a five-finger pinch, a five-finger expansion, a one-finger pull-down, a multi-finger single tap, or a multi-finger double tap.

3. The system of claim 2, wherein the controller is configured to increase or decrease an audio volume in response to the two-finger swipe on the screen.

4. The system of claim 3, wherein the controller is configured to generate an audio signal corresponding to adjusted volume level each time the adjusted volume changes over or below a predetermined level.

5. The system of claim 3, further comprising an actuator configured to generate haptic feedback each time adjusted audio volume crosses over predetermined levels as a user swipes fingers down or up.

6. The system of claim 2, wherein the controller is configured to exit a current page or application on the screen in response to the five-finger pinch.

7. The system of claim 6, wherein the controller is configured to return to a previous page or application in response to the five-finger expansion.

8. The system of claim 2, wherein the controller is configured to bookmark a current page displayed on the screen in response to the one-finger pull-down.

9. The system of claim 2, wherein the controller is configured to mute an audio in response to the multi-finger double tap.

10. The system of claim 9, wherein the controller is configured to unmute the audio in response to the multi-finger single tap.

11. The system of claim 2, wherein a different functionality is assigned to a same multi-touch gesture depending on an application being executed.

12. The system of claim 1, wherein acoustic or haptic feedback is generated in response to the multi-touch gesture.

13. The system of claim 1, wherein the system is installed in a vehicle cabin.

14. A method for sensing multi-touch gesture in a vehicle, comprising:
detecting a multi-touch gesture on a screen of a multi-touch sensing device installed in a vehicle; and
performing a function associated with the detected multi-touch gesture, wherein the associated function is performed regardless of a location on the screen that the multi-touch gesture is detected.

15. The method of claim 14, wherein the multi-touch gesture is one of a multi-finger swipe, a five-finger pinch, a five-finger expansion, a one-finger pull-down, a multi-finger single tap, or a multi-finger double tap.

16. The method of claim 15, wherein a different functionality is assigned to a same multi-touch gesture depending on an application being executed.

17. The method of claim 14, further comprising generating acoustic or haptic feedback in response to the multi-touch gesture.

18. A non-transitory machine-readable storage medium including machine readable instructions, when executed, to implement a method of claim 14.
